# EUROPÄISCHE PATENTSCHRIFT

(11) **EP 2 307 220 B1**
(45) Veröffentlichungstag und Bekanntmachung des Hinweises auf die Patenterteilung: **26.09.2012**
(21) Anmeldenummer: 09776753.7
(22) Anmeldetag: 17.06.2009
(51) Int. Cl.: B60K 15/03

(54) **KRAFTFAHRZEUG-KRAFTSTOFFBEHÄLTER**
MOTOR VEHICLE FUEL TANK
RÉSERVOIR À CARBURANT DE VÉHICULE AUTOMOBILE

(30) Priorität: 06.08.2008 DE 102008036538
(43) Veröffentlichungstag der Anmeldung: 13.04.2011
(73) Patentinhaber: Kautex Textron GmbH & Co. KG, 53229 Bonn (DE)
(72) Erfinder: GEBERT, Klaus, 47877 Willich (DE); WAGNER, Axel, 53227 Bonn (DE)
(74) Vertreter: Polypatent
(86) Internationale Anmeldenummer: PCT/EP2009/004348
(87) Internationale Veröffentlichungsnummer: WO 2010/015295

(56) Entgegenhaltungen:
- EP-A- 0 838 360
- EP-A- 0 922 602
- EP-A- 0 930 190
- EP-A- 1 084 889
- DE-A1- 2 440 904
- DE-A1- 10 328 961
- US-A1- 2005 045 227

## Beschreibung

Die Erfindung betrifft einen Kraftfahrzeug-Kraftstoffbehälter aus thermoplastischem Kunststoff mit wenigstens einem nicht einstückig angeformten Einfüllrohr.

Kraftfahrzeug-Kraftstoffbehälter aus thermoplastischem Kunststoff haben gegenüber vergleichbaren Metallbehältern den Vorzug, dass diese nahezu in jeder beliebigen Gestalt mit einer verhältnismäßig komplexen Außenkontur herstellbar sind. Solche Behälter sind verhältnismäßig widerstandsfähig, da mechanische Einwirkungen von außen, beispielsweise im Crash-Fall, in der Regel nicht zu bleibenden Deformationen des Kunststoffbehälters führen. Darüber hinaus lassen sich solche Kraftfahrzeug-Kraftstoffbehälter nahezu an jede beliebige Einbausituation im Kraftfahrzeug anpassen. Bei bekannten einstückig bzw. einteilig ausgebildeten Kraftstoffbehältern aus Kunststoff sind Einfüllrohre sowie Be- und Entlüftungsleitungen zumindest teilweise einstückig mit angeformt. Bei der Herstellung solcher Behälter durch Extrusionsblasformen lassen sich in verhältnismäßig einfacher Art und Weise eine oder mehrere parallele Rohrleitungen einfach an dem Behälter anformen. Neben dem Einfüllrohr können beispielsweise auch Entlüftungsleitungen mit Ausperlbehältem und dergleichen in einem Arbeitsgang angeformt werden.

Nicht immer erlaubt es der verfügbare Montagebauraum eines Kfz solche Behälter im Kfz zu integrieren. Insbesondere wenn die Einfüllöffnung des Kraftstoffbehälters verhältnismäßig weit weg von dem Behältervolumen angeordnet sein soll, wird häufig aus Gründen der Montagevereinfachung auf ein einstückig angeformtes Einfüllrohr verzichtet. Das Einfüllrohr wird erst bei Montage des Kraftstoffbehälters im Kfz an den Kraftstoffbehälter angeschlossen. In der Regel ist hierzu an dem Kraftstoffbehälter ein größerer Anschlussfitting vorgesehen, auf den ein elastisches Anschlusselement aufgeklemmt wird. Dieses Anschlusselement kann beispielsweise mit Schellen an dem Kraftstoffbehälter gas- und flüssigkeitsdicht befestigt werden.

Eine solche Verbindung kann allerdings bei aufprallbedingten Krafteinwirkungen abreißen, sodass dann zwangsläufig flüssige Kohlenwasserstoffe freigesetzt werden. Die bekannten Anschlüsse von Einfüllrohren, die nicht einstückig mit dem Kraftstoffbehälter verbunden sind, sind diesbezüglich wenig vorteilhaft. Darüber hinaus ist die Abdichtung solcher nachträglich hergestellter Verbindungen zwischen Einfüllrohr und Kraftstoffbehälter problematisch. Häufig werden elastomere Schläuche auf den am Kraftstoffbehälter vorgesehenen Anschlussfitting und auf ein fest installiertes Einfüllrohr geklemmt. Solche Lösungen sind insbesondere im Zusammenhang mit ethanolhaltigen Kraftstoffen problematisch. Hier kann unter Umständen eine vollständige Abdichtung der Anschlussstellen wegen des hohen Dampfdrucks der ethanolhaltigen Treibstoffe nicht mehr gewährleistet werden.

Aus er EP 1 084 889 A1 ist ein Tankeinsatz und ein Verfahren zu dessen Herstellung bekannt. Der Tankeinsatz ist als Einsatz aus thermoplastischem Material zur Verbindung mit einem Kraftstofftank als eine Anschlussöffnung desselben auskleidendes und/oder einen Sitz für ein Anschlusselement bildendes Bauteil ausgebildet. Der Einsatz zeichnet sich insbesondere dadurch aus, dass er durch Pressformen eines für Kohlenwasserstoffe schwer permeablen Laminats erhalten wurde. Diese Einsatz ist mit einem Ventil versehen, welches ein Anschlussnippel für eine Entlüftungsleitung aufweist.

Aus der DE 24 40 904 A ist ein Kraftstoffbehälter für Kraftfahrzeuge bekannt, der eine Kraftstoffpumpeneinheit umfasst, die innerhalb des Kraftstoffbehälters an einer separaten Baueinheit angeordnet ist, welche eine Entnahmevorrichtung umfasst. Die Baueinheit stützt sich an gegenüberliegenden Wandungen des Kraftstoffbehälters ab, wobei die Abstützung unter Vermittlung eines Dichtkörpers und eines Verschlussorgans erfolgt und das Verschlussorgan als Überwurfmutter ausgebildet ist.

Der Erfindung liegt daher die Aufgabe zugrunde, einen Kraftfahrzeug-Kraftstoffbehälter aus thermoplastischem Kunststoff mit wenigstens einem nicht einstückig angeformten Einfüllrohr bereitzustellen, welche die zuvor erwähnten Nachteile nicht aufweist, welcher insbesondere einen Anschluss des Einfüllrohrs ermöglicht, bei welchem potentielle Emissionspfade insbesondere für Treibstoffe mit hohem Dampfdruck auf ein Minimum beschränkt werden.

Die Aufgabe wird gelöst durch einen Kraftstoffbehälter mit den Merkmalen der Ansprüche 1 und 2. Vorteilhafte Ausgestaltungen der Erfindung ergeben sich aus den Unteransprüchen.

Die Erfindung kann dahingehend zusammengefasst werden, dass das Einfüllrohr erfindungsgemäß in den Kraftstoffbehälter hineingeführt ist und radial gegen den Kraftstoffbehälter oder einen darin befindlichen Einsatz abgedichtet ist, wobei die Abdichtung weitestgehend im Inneren des Kraftstoffbehälters angeordnet ist. Auf diese Art und Weise kann zuverlässig eine Migration von flüssigen und/oder gasförmigen Kohlenwasserstoffen im Bereich des Anschlusses des Einfüllrohrs aus dem Kraftstoffbehälter verhindert werden.

Zweckmäßigerweise ist das Einfüllrohr axial gegen die Behälterwandung verspannt. Besonders vorteilhaft ist es, dass die Abdichtung und die Befestigung des Einfüllrohrs funktional voneinander getrennt sind, wodurch eine besonders wirksame Abdichtung gewährleistet ist.

Im Gegensatz hierzu ist bei den bekannten Anschlüssen von Einfüllrohren an Kraftstoffbehältern keine funktionale Trennung zwischen Abdichtung und Befestigung vorgesehen, sodass die Dichtung unter Umständen auf auf das Einfüllrohr einwirkenden Kräften standhalten muss, was zu Undichtigkeiten führen kann. Erfindungsgemäß werden die Dichtmittel vollständig von Montagekräften freigehalten, sodass die Dichtfunktion nicht durch mechanische Krafteinwirkung beeinträchtigt werden kann.

Gemäß der Erfindung ist vorgesehen, dass das Einfüllrohr im Bereich seines Anschlusses an die Wandung des Kraftstoffbehälters wenigstens einen umlaufenden, flanschartigen Kragen aufweist, der mit einer Überwurfverschraubung axial gegen die Wandung des Kraftstoffbehälters gesichert ist oder der mittels eines Spannrings an einem Flanschring des Kraftstoffbehälters gesichert ist.

Bei einer weiteren vorteilhaften Variante des Kraftstoffbehälters gemäß der Erfindung ist vorgesehen, dass die Öffnung in der Behälterwandung mit einem Einsatzstutzen versehen ist, der mit der Behälterwandung verschweißt ist und gegen den das Einfüllrohr im Inneren des Kraftstoffbehälters radial abgedichtet ist.

Der Einsatzstutzen kann in einem in den Kraftstoffbehälter hineinragenden Bereich zumindest teilweise aus einem Kunststoff bestehen, der bei Anwesenheit von flüssigen oder gasförmigen Kohlenwasserstoffen nicht quillt. Auf diese Art und Weise ist eine Formhaltigkeit des Einsatzes in jedem Fall gewährleistet, wodurch ebenfalls einer dauerhaften Abdichtung Rechnung getragen wird.

Der Einsatzstutzen kann beispielsweise in einem in den Kraftstoffbehälter hineinragenden Bereich mit einer umlaufenden Bandage aus einem gegen flüssige oder gasförmige Kohlenwasserstoffe beständigen Material versehen sein. Hierfür kommen beispielsweise Kunststoffe wie POM, PA oder ABS in Betracht. Eine solche Bandage kann entweder aus einem nicht quellfähigen Kunststoff oder aus Metall bestehen.

Bei einer alternativen Variante des Kraftstoffbehälters nach der Erfindung ist die Öffnung in einer Ein- oder Ausstülpung der Behälterwandung vorgesehen. Die Ein- oder Ausstülpung kann ebenso mit einer Bandage oder einem Ring aus einem gegen flüssige oder gasförmige Kohlenwasserstoffe beständigen Material eingefasst sein.

Die Behälterwandung und das Einfüllrohr bestehen zweckmäßigerweise aus einem mehrschichtigen Extrudat aus thermoplastischem Kunststoff mit wenigstens einer Barriereschicht für flüssige oder gasförmige Kohlenwasserstoffe.

Die Erfindung wird nachstehend anhand mehrerer in den Zeichnungen dargestellter Ausführungsbeispiele erläutert.

Es zeigen:
- Figur 1a, 1 b: einen Schnitt durch die Behälterwandung eines Kraftstoffbehälters mit einem in diese eingesetzten Einfüllrohr im Bereich des Anschlusses,
- Figur 2: eine den Figuren 1a, 1b entsprechende Ansicht eines zweiten Ausführungsbeispiels gemäß der Erfindung,
- Figur 3: eine Ansicht eines dritten Ausführungsbeispiels gemäß der Erfindung und
- Figur 4: eine Ansicht eines vierten Ausführungsbeispiels gemäß der Erfindung.

Der Kraftstoffbehälter 1 nach der Erfindung ist in bekannter Art und Weise als 6-oder 7-schichtiges Co-Extrudat aus thermoplastischem Kunststoff blasgeformt. Der Einfachheit halber ist der Kraftstoffbehälter 1 nicht vollständig dargestellt. Lediglich die Behälterwandung 2 ist in den Figuren gezeigt. Auch der genaue Schichtaufbau des extrusionsblasgeformten Kraftstoffbehälters 1 ist nicht gezeigt, lediglich eine Barriereschicht 3 gegen flüssige und/oder gasförmige Kohlenwasserstoffe ist in den Figuren eingezeichnet.

Der Kraftstoffbehälter kann beispielsweise aus einem schlauchförmigen Extrudat extrusionsblasgeformt sein. Alternativ ist es möglich, diesen aus bahn- oder plattenförmigen Extrudaten in der ersten Hitze auszuformen. Schließlich kann der Kraftstoffbehälter gemäß der Erfindung auch durch Thermoformen aus plattenförmigen Halbzeugen erhalten worden sein.

Zur Aufnahme eines Einfüllrohrs 4, welches ebenfalls aus thermoplastischem Kunststoff besteht, ist die Behälterwandung 2 mit einer Öffnung 5 versehen, die beispielsweise durch Auskreisen erhalten wurde.

Das Einfüllrohr 4 ist nur im Bereich seines an den Kraftstoffbehälter 1 angeschlossenen Endes dargestellt.

Bei dem ersten Ausführungsbeispiel der Erfindung ist in die Öffnung 5 der Behälterwandung 2 ein Einsatzstutzen 6 eingesetzt. Dieser Einsatzstutzen 6 kann ebenso extrusionsblasgeformt sein. In einem bevorzugten Ausführungsbeispiel ist der Einsatzstutzen 6 aus dem beim Blasformen anfallenden Butzenmaterial pressgeformt. Der Schichtaufbau des Einsatzstutzens 6 entspricht daher demjenigen der Behälterwandung 2.

Der Einsatzstutzen 6 ist mit einem umlaufenden Flansch 7 versehen, der mit einem die Öffnung 5 umgebenden Kragen 8 der Behälterwandung 2 verschweißt ist, und zwar so, dass die Barriereschichten 3 des Einsatzstutzens 6 und der Behälterwandung 2 andererseits senkrecht zueinander verlaufen.

Der Einsatzstutzen 6, der mit einem Ende in das Behälterinnere 9 hineinragt, nimmt das in diesem abgedichtete Ende des Einfüllrohres 4 auf. An seinem von den Einsatzstutzen 6 umschlossenen Ende ist das Einfüllrohr 4 mit einer oder mehrerer umlaufenden Nuten 10 versehen, die jeweils O-Ring-Dichtungen 11 aufnehmen.

Das Einfüllrohr 4 ist in dem Bereich seines Anschlusses an den Kraftstoffbehälter 1 ebenfalls mit einem umlaufenden Kragen 12 versehen, der gegen den Flansch 7 des Einsatzstutzens 6 als Anschlag anliegt. Unterhalb des Flansches 7 des Einsatzstutzens 6 ist ein Gewindering 13 angeordnet, der ein- oder mehrteilig ausgebildet sein kann und mit einer Überwurfmutter 14 zusammenwirkt. Die Überwurfmutter 14 übergreift den Kragen 12 des Einfüllrohres 4. Die Überwurfmutter 14 ist mit einem Innengewinde versehen, welches mit dem Gewindering 13 zusammenwirkt. Über die Überwurfmutter 14, die sich unterseitig auf dem Flansch 7 abstützt, lässt sich das Einfüllrohr 4 axial (bezogen auf die Längsachse des Einfüllrohres) gegen die Behälterwandung 2 verspannen.

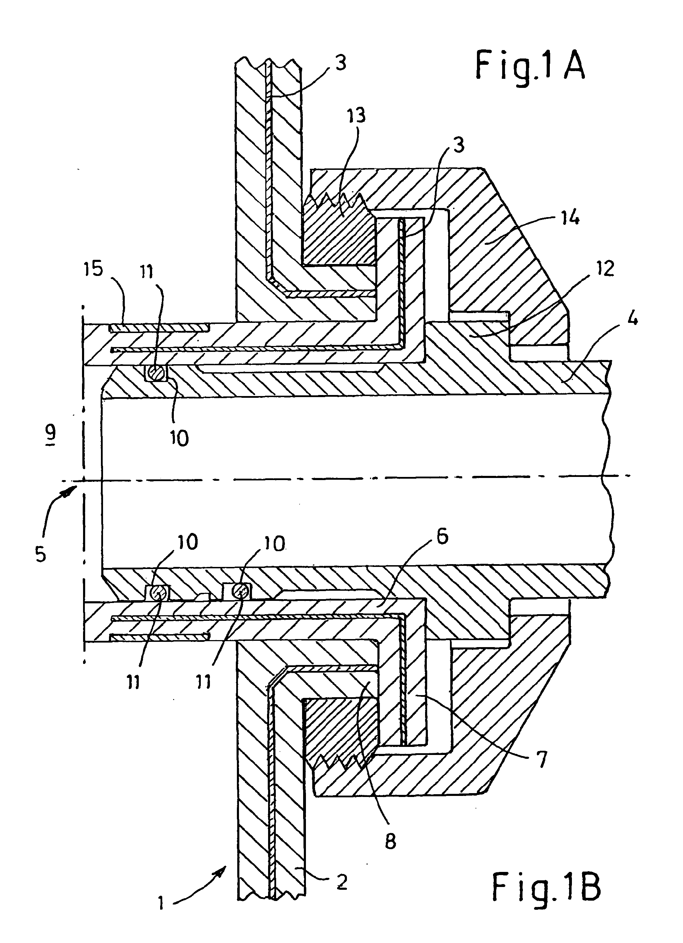

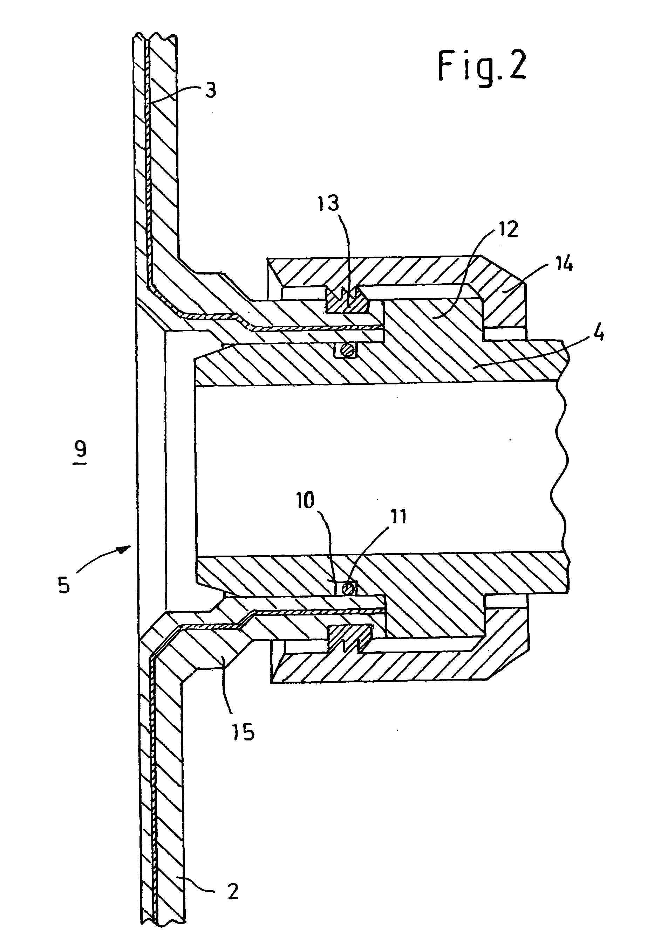

In Figur 1 a ist eine Variante des Einfüllrohres mit nur einer O-Ring-Dichtung 11 dargestellt, wohingegen in Figur 2b eine Variante des Einfüllrohres 4 dargestellt ist, bei der zwei O-Ring-Dichtungen 11 in Achsrichtung hintereinander angeordnet sind.

Da der Einsatzstutzen 6, wie vorstehend beschrieben, aus einem thermoplastischen Kunststoff bestehen kann, der bei Anwesenheit von flüssigen oder gasförmigen Kohlenwasserstoffen quellen kann, ist dieser mit einer umlaufenden Bandage 15 aus einem nicht quellfähigen Material versehen. Diese Bandage 15 kann beispielsweise aus Metall oder einem nicht quellfähigen Kunststoff bestehen. Diese verhindert ein Auftreiben des Einfüllrohres 4 in einer Richtung quer zu dessen Längsachse, sodass die dichtende Anlage der O-Ring-Dichtungen 11 zu jeder Zeit gewährleistet ist.

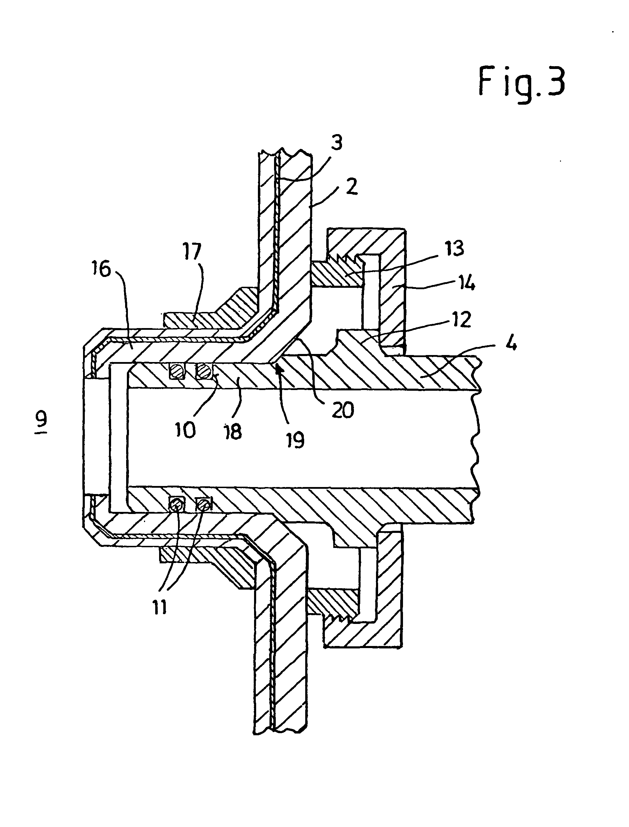

Bei den in den Figuren 2 und 3 erläuterten Ausführungsbeispielen sind Bauteile, die denjenigen des in Figur 1 beschriebenen Ausführungsbeispiels funktional entsprechen, mit gleichen Bezugszeichen versehen.

Figur 2 zeigt eine Variante des Kraftstoffbehälters 1, bei dem die Behälterwandung 2 mit einer Ausstülpung 15 versehen ist. Wie bei dem in den Figuren 1a, 1b gezeigten Ausführungsbeispiels ist das Einfüllrohr 4 in der Öffnung 5 innerhalb der Ausstülpung 15 mittels einer O-Ring-Dichtung 11 gegen die Behälterwandung 2 abgedichtet. Am Außenumfang der Ausstülpung 15 ist ebenfalls ein Gewindering 13 vorgesehen, der in einer Nut der Ausstülpung 15 aufgenommen wird. Mittels der mit 14 bezeichneten Überwurfmutter, die mit einem Innengewinde mit dem Gewindering 13 zusammenwirkt, wird das Einfüllrohr 4 axial gesichert, wobei die Überwurfmutter 14 den umlaufenden Kragen 8 des Einfüllrohrs 4 umgreift. Eine Formänderung der Ausstülpung 15 wird dadurch entgegengewirkt, dass diese von der Überwurfmutter 14 umgriffen wird.

Bei dem in Figur 3 dargestellten Ausführungsbeispiel ist die Öffnung 5 in einer Einstülpung 16 der Behälterwandung 2 vorgesehen. Im Übrigen entspricht die in Figur 3 dargestellte Anordnung im Wesentlichen der in Figur 2 dargestellten Anordnung, wobei allerdings der Gewindering 13 mit der Behälterwandung 2 verschweißt ist.

Die Einstülpung 16 ist im Behälterinnern 9 von einem Spannring 17 eingefasst, der ein Auftreiben der Einstülpung 16 in radiale Richtung aufgrund einer Quellung durch Einwirkung von Kohlenwasserstoffen verhindert.

Weiterhin ist bei dem in Figur 3 dargestellten Ausführungsbeispiel das Einfüllrohr 4 mit einem im Durchmesser verringerten Bund 18 versehen, der einen umlaufenden abgeschrägten Absatz 19 bildet. Der Absatz 19 liegt gegen eine umlaufende Schulter 20 der Einstülpung 16 so an, dass das Einfüllrohr 4 sich mit dem Absatz 19 gegen die Schulter 20 abstützt.

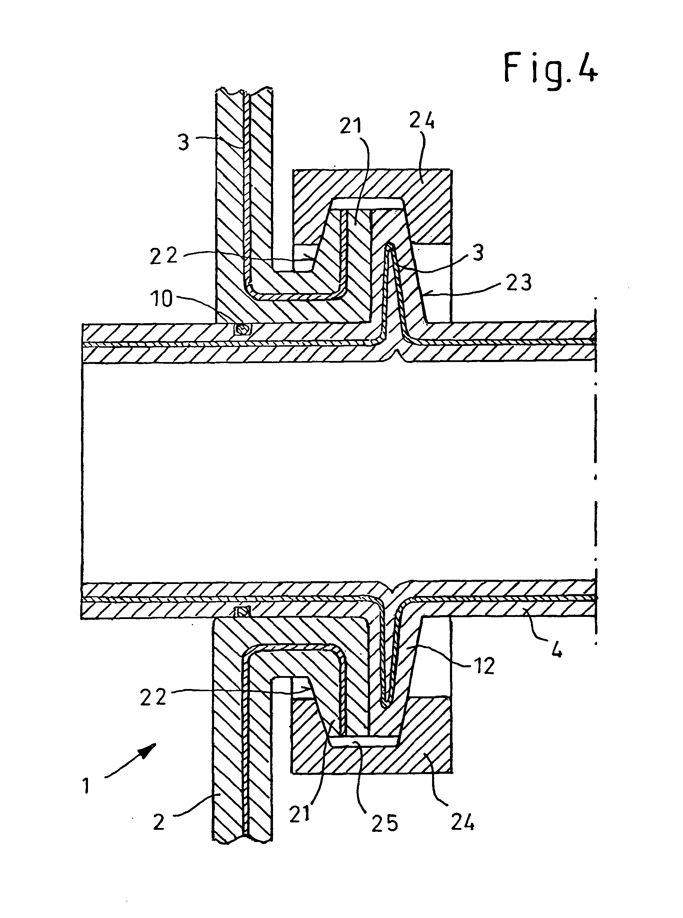

Eine weitere Variante des Kraftstoffbehälters 1 gemäß der Erfindung ist in Figur 4 dargestellt. Die Öffnung 5 in der Behälterwandung 2 ist als umlaufender Flanschring 21 ausgebildet, wobei die der Behälterwandung 2 zugekehrte Unterseite 22 des Flanschrings 21 nach außen abgeschrägt ist, derart, dass die Wandstärke des Flanschrings 21 von der Öffnung 5 hin nach außen (radial) abnimmt.

Der Kragen 12 des Einfüllrohrs 4 besitzt einen Außendurchmesser, der demjenigen des Flanschrings 21 entspricht. Die Oberseite 23 des Kragens 12 ist ebenfalls abgeschrägt, und zwar radial auswärts abschüssig, sodass der Flanschring 21 und der auf Anschlag darüberliegend angeordnete Kragen 12 des Einfüllrohrs eine im Querschnitt trapezoide Form aufweisen. Das Einfüllrohr 4 wird auf dem Flanschring 21 mittels eines Spannrings 24 gehalten, wobei der Spannring 24 eine im Querschnitt trapezförmig ausgebildete umlaufende Nut 25 aufweist, die die Unterseite 22 des Flanschrings 21 und die Oberseite 23 des Kragens 12 umgreift. Der Spannring 24 kann einteilig oder auch zweiteilig ausgebildet sein. Die Tiefe und Geometrie der Nut 25 sind dabei so bemessen, dass eine Verspannung in Umfangsrichtung eine Flächenpressung des Flanschrings 21 und des Kragens 12 aufeinander und somit auch eine axiale Verspannung der Bauteile bewirkt.

Wie bei dem zuvor beschriebenen Ausführungsbeispielen erfolgt die Abdichtung beispielsweise mit einer O-Ring-Dichtung 11, die in eine umlaufende Nut 10 des Einfüllrohres 4 eingebettet ist.

### Bezugszeichenliste

- 1: Kraftstoffbehälter
- 2: Behälterwandung
- 3: Barriereschicht
- 4: Einfüllrohr
- 5: Öffnung
- 6: Einsatzstutzen
- 7: Flansch
- 8: Kragen
- 9: Behälterinneres
- 10: Nuten
- 11: O-Ring-Dichtungen
- 12: Kragen
- 13: Gewindering
- 14: Überwurfmutter
- 15: Ausstülpung
- 16: Einstülpung
- 17: Spannring
- 18: Bund
- 19: Absatz
- 20: Schulter
- 21: Flanschring
- 22: Unterseite des Flanschrings
- 23: Oberseite des Kragens
- 24: Spannring
- 25: Nut

## Patentansprüche

1. Kraftfahrzeug-Kraftstoffbehälter (1) aus thermoplastischem Kunststoff mit wenigstens einem nicht einstückig angeformten Einfüllrohr (4), das flüssigkeitsdicht an den Kraftstoffbehälter (1) angeschlossen ist, wobei das Einfüllrohr (4) in eine Öffnung (5) des Kraftstoffbehälters (1) eingesetzt ist und mit Dichtmitteln in der Öffnung (5) an seinem Außenumfang abgedichtet ist, wobei das Einfüllrohr (4) im Bereich seines Anschlusses an die Wandung des Kraftstoffbehälters wenigstens einen umlaufenden, flanschartigen Kragen (12) aufweist, der mittels eines Spannrings (24) an einem Flanschring (21) des Kraftstoffbehälters gesichert ist, wobei der Spannring (24) eine im Querschnitt trapezförmig ausgebildete umlaufende Nut (25) aufweist, die eine abgeschrägte Unterseite (22) des Flanschrings (21) und eine abgeschrägte Oberseite (23) des Kragens (12) umgreift, derart dass eine Verspannung in Umfangsrichtung eine Flächenpressung des Flanschrings (21) und eine axiale Verspannung der Bauteile bewirkt.

2. Kraftfahrzeug-Kraftstoffbehälter (1) aus thermoplastischem Kunststoff mit wenigstens einem nicht einstückig angeformten Einfüllrohr (4), das flüssigkeitsdicht an den Kraftstoffbehälter (1) angeschlossen ist, wobei das Einfüllrohr (4) in eine Öffnung (5) des Kraftstoffbehälters (1) eingesetzt ist und mit Dichtmitteln in der Öffnung (5) an seinem Außenumfang abgedichtet ist, wobei das Einfüllrohr (4) im Bereich seines Anschlusses an die Wandung des Kraftstoffbehälters wenigstens einen umlaufenden flanschartigen Kragen (12) aufweist, der mit einer Überwurfverschraubung axial gegen die Wandung des Kraftstoffbehälters (1) gesichert ist, wobei die Öffnung in der Behälterwandung (2) mit einem Einsatzstutzen (6) versehen ist, der mit der Behälterwandung (2) verschweißt ist und gegen den das Einfüllrohr (4) im Inneren des Kraftstoffbehälters (1) radial abgedichtet ist oder wobei die Öffnung (5) in einer Ausstülpung (15) der Behälterwandung (2) vorgesehen ist und wobei unterhalb eines Flansches (7) des Einsatzstutzens (6) oder in einer Nut der Ausstülpung (15) ein Gewindering (13) angeordnet ist, der mit einer Überwurfmutter (14) zusammenwirkt.

3. Kraftstoffbehälter nach Anspruch 1 oder 2, **dadurch gekennzeichnet, dass** das Einfüllrohr (4) axial gegen die Behälterwandung (2) verspannt ist.

4. Kraftstoffbehälter nach einem der Ansprüche 1 bis 3, **dadurch gekennzeichnet, dass** die Abdichtung und die Befestigung des Einfüllrohres (4) funktional getrennt sind.

5. Kraftstoffbehälter nach Anspruch 2, **dadurch gekennzeichnet, dass** der Einsatzstutzen (6) in einem in den Kraftstoffbehälter hineinragenden Bereich zumindest teilweise aus einem Material besteht, das bei Anwesenheit von flüssigen oder gasförmigen Kohlenwasserstoffen nicht quillt.

6. Kraftstoffbehälter nach Anspruch 2, **dadurch gekennzeichnet, dass** der Einsatzstutzen (6) in einem in den Kraftstoffbehälter hineinragenden Bereich mit einer umlaufenden Bandage aus einem gegenüber flüssigen und gasförmigen Kohlenwasserstoffen beständigen Material versehen ist.

7. Kraftstoffbehälter nach Anspruch 2, **dadurch gekennzeichnet, dass** die Ausstülpung (15) mit einer Bandage oder einem Ring aus einem bei Anwesenheit von flüssigen oder gasförmigen Kohlenwasserstoffen nicht quellfähigem Material eingefasst ist.

8. Kraftstoffbehälter nach einem der Ansprüche 1 bis 7, **dadurch gekennzeichnet, dass** die Behälterwandung (2) und das Einfüllrohr aus einem mehrschichtigen Co-Extrudat aus thermoplastischem Kunststoff mit wenigstens einer Barriereschicht für flüssige oder gasförmige Kohlenwasserstoffe bestehen.

## Claims

1. Motor vehicle fuel tank (1) of thermoplastics having at least one filler neck (4) not moulded on in one piece, the latter being connected in a fluid-tight manner to the fuel tank (1), wherein the filler neck (4) is inserted into an opening (5) in the fuel tank (1) and is sealed by sealing means at its outer circumference in the opening (5), wherein the filler neck (4) comprises in the region of its connection to the wall of the fuel tank at least one circumferential, flange-like collar (12), which is secured against a flanged ring (21) of the fuel tank by means of a clamping ring (24), wherein the clamping ring (24) comprises a cross-sectionally trapezoidal circumferential groove (25) which engages around a bevelled bottom (22) of the flanged ring (21) and a bevelled top (23) of the collar 12 in such a way that clamping in the circumferential direction brings about surface pressure on the flanged ring (21) and axial clamping of the components.

2. Motor vehicle fuel tank (1) of thermoplastics having at least one filler neck (4) not moulded on in one piece, the latter being connected in a fluid-tight manner to the fuel tank (1), wherein the filler neck (4) is inserted into an opening (5) in the fuel tank (1) and is sealed by sealing means at its outer circumference in the opening (5), wherein the filler neck (4) comprises in the region of its connection to the wall of the fuel tank at least one circumferential, flange-like collar (12), which is secured axially against the wall of the fuel tank (1) by a union joint, wherein the opening in the tank wall (2) is provided with a connecting insert (6), which is welded to the tank wall (2) and relative to which the filler neck (4) is sealed radially inside the fuel tank (1) or wherein the opening (5) is provided in an outwardly protruding portion (15) of the tank wall (2) and wherein below a flange (7) of the connecting insert (6) or in a groove of the outwardly protruding portion (15) there is arranged a threading ring (13), which interacts with a union nut (14).

3. Fuel tank according to Claim 1 or 2, **characterized in that** the filler neck (4) is clamped axially against the tank wall (2).

4. Fuel tank according to one of Claims 1 to 3, **characterized in that** the sealing and fastening of the filler neck (4) are functionally separate.

5. Fuel tank according to Claim 2, **characterized in that**, in a region projecting into the fuel tank, the connecting insert (6) consists at least partially of a material which does not swell up in the presence of liquid or gaseous hydrocarbons.

6. Fuel tank according to Claim 2, **characterized in that**, in a region projecting into the fuel tank, the connecting insert (6) is provided with a circumferential band of a material resistant to liquid and gaseous hydrocarbons.

7. Fuel tank according to Claim 2, **characterized in that** the outwardly protruding portion (15) is encompassed by a band or a ring of a material which does not swell up in the presence of liquid or gaseous hydrocarbons.

8. Fuel tank according to one of Claims 1 to 7, **characterized in that** the tank wall (2) and the filler neck consist of a multilayer coextrudate of thermoplastics with at least one barrier layer for liquid or gaseous hydrocarbons.

## Revendications

1. Réservoir à carburant d'un véhicule automobile (1) en matière thermoplastique comportant au moins un tube de remplissage (4) non réalisé d'un seul tenant qui est rattaché au réservoir à carburant (1) de manière étanche aux liquides, le tube de remplissage (4) étant inséré dans un orifice (5) du réservoir à carburant (1) et étanché par des joints sur sa circonférence externe à l'intérieur de l'orifice (5), le tube de remplissage (4) présentant au moins un col (12) circulaire et à mode de bride au niveau de son raccordement à la paroi du réservoir à carburant, col qui est fixé sur un anneau de bride (21) du réservoir à carburant au moyen d'une bague de serrage (24), la bague de serrage (24) présentant une rainure circulaire (25) réalisée avec une coupe transversale trapézoïdale, rainure qui entoure une face inférieure chanfreinée (22) de l'anneau de bride (21) et une face supérieure chanfreinée (23) du col (12) de telle sorte qu'un blocage, dans le sens circonférentiel, produit une pression d'engrènement de l'anneau de bride (21) et un blocage axial des pièces.

2. Réservoir à carburant d'un véhicule automobile (1) en matière thermoplastique comportant au moins un tube de remplissage (4) non réalisé d'un seul tenant qui est rattaché au réservoir à carburant (1) de manière étanche aux liquides, le tube de remplissage (4) étant inséré dans un orifice (5) du réservoir à carburant (1) et étanche par des joints sur sa circonférence externe à l'intérieur de l'orifice (5), le tube de remplissage (4) présentant au moins un col (12) circulaire et à mode de bride au niveau de son raccordement à la paroi du réservoir à carburant, col qui est fixé contre la paroi du réservoir à carburant (1), dans le sens axial, à l'aide d'un raccord vissé avec écrou à chapeau, l'orifice situé dans la paroi du réservoir (2) étant pourvu d'un embout (6) qui est soudé à la paroi du réservoir (2) et étanché dans le sens radial par rapport au tube de remplissage (4) à l'intérieur du réservoir à carburant (1) et l'orifice (5) étant prévu dans une protubérance (15) de la paroi du réservoir (2) et un anneau fileté (13) étant agencé en dessous d'une bride (7) de l'embout (6) ou dans une rainure de la protubérance (15), anneau fileté (13) qui coopère avec un écrou à chapeau (14).

3. Réservoir à carburant selon la revendication 1 ou 2, **caractérisé en ce que** le tube de remplissage (4) est bloqué dans le sens axial, contre la paroi du réservoir (2).

4. Réservoir à carburant selon l'une quelconque des revendications 1 à 3, **caractérisé en ce que** l'étanchement et la fixation du tube de remplissage (4) sont séparés du point de vue fonctionnel.

5. Réservoir à carburant selon la revendication 2, **caractérisé en ce que** l'embout (6) est constitué au moins en partie, dans une zone s'enfonçant dans le réservoir à carburant, d'un matériau qui ne gonfle pas en présence d'hydrocarbures liquides ou gazeux.

6. Réservoir à carburant selon la revendication 2, **caractérisé en ce que** l'embout (6) est pourvu, dans une zone s'enfonçant dans le réservoir à carburant, d'un bandage circulaire constitué d'un matériau résistant aux hydrocarbures liquides ou gazeux.

7. Réservoir à carburant selon la revendication 2, **caractérisé en ce que** la protubérance (15) est entourée d'un bandage ou d'un anneau composé d'un matériau qui ne gonfle pas en présence d'hydrocarbures liquides ou gazeux.

8. Réservoir à carburant selon l'une quelconque des revendications 1 à 7, **caractérisé en ce que** la paroi du réservoir (2) et le tube de remplissage sont composés d'un produit co-extrudé à couches multiples en matière thermoplastique avec au moins une couche de blocage des hydrocarbures liquides ou gazeux.
